# EUROPÄISCHE PATENTSCHRIFT

(11) **EP 3 164 934 B1**
(45) Veröffentlichungstag und Bekanntmachung des Hinweises auf die Patenterteilung: **13.04.2022**
(21) Anmeldenummer: 14757868.6
(22) Anmeldetag: 15.08.2014
(51) Int. Cl.: H02M 5/458, H02M 7/49

(54) **UMRICHTERANORDNUNG**
CONVERTER ARRANGEMENT
ENSEMBLE CONVERTISSEUR

(43) Veröffentlichungstag der Anmeldung: 10.05.2017
(73) Patentinhaber: Siemens Energy Global GmbH & Co. KG, 81739 München (DE)
(72) Erfinder: HÖRGER, Wolfgang, 91353 Hausen (DE); PIESCHEL, Martin, 90473 Nürnberg (DE)
(86) Internationale Anmeldenummer: PCT/EP2014/067502
(87) Internationale Veröffentlichungsnummer: WO 2016/023594

(56) Entgegenhaltungen:
- WO-A1-2011/141059
- US-B1- 6 236 580

## Beschreibung

Die Erfindung bezieht sich auf eine Umrichteranordnung zur Versorgung von Lichtbogenöfen mit zumindest einem Eingangswechselspannungsanschluss, an dem ein Wechselstrom eingespeist werden kann, und zumindest einem Ausgangswechselspannungsanschluss, an dem Wechselstrom entnommen werden kann.

Eine Umrichteranordnung ist in der internationalen Patentanmeldung WO 2012/152619A2 beschrieben. Die Umrichteranordnung umfasst zumindest eine Reihenschaltung mit mindestens zwei in Reihe geschalteten Teilmodulen, wobei die Teilmodule der Reihenschaltung jeweils mindestens ein Umrichtermodul, ein Wechselrichtermodul und ein Transformatormodul aufweisen. Die vorbekannte Umrichteranordnung arbeitet als eine Art Energieverteilanlage und dient zum Verteilen elektrischer Energie. Die Teilmodule der vorbekannten Umrichteranordnung werden zu diesem Zweck räumlich verteilt, beispielsweise über ein ganzes Stadtgebiet; sie bilden lokale Entnahme- und/oder Einspeisestellen der Energieverteilanlage zur Entnahme und/oder zur Einspeisung elektrischer Energie. Die Anschlüsse zum Einspeisen und zur Entnahme der elektrischen Energie werden durch die Transformatormodule der Teilmodule gebildet.

Aus der Patentschrift US 6,236,580 B1 ist zur Speisung eines Motors ein rückspeisefähiger Stromrichter mit einem Eingangswechselspannungsanschluss und einem Ausgangswechselspannungsanschluss bekannt. Der Stromrichter weist eine Reihenschaltung von 3 Zellen auf. Die Zellen beinhalten jeweils ein Gleichrichtermodul, ein Wechselrichtermodul und ein Transformatormodul. Die Anschlüsse der Transformatormodule sind dabei parallel geschaltet.

Der Erfindung liegt die Aufgabe zugrunde, eine Anordnung mit einer Umrichteranordnung anzugeben, die zur Versorgung von Lichtbogenöfen dient. Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist vorgesehen, dass die Ausgänge der Transformatormodule der jeweiligen Reihenschaltung parallel geschaltet sind und den Ausgangswechselspannungsanschluss oder zumindest einen der Ausgangswechselspannungsanschlüsse bilden.

Ein wesentlicher Vorteil der erfindungsgemäßen Umrichteranordnung ist darin zu sehen, dass diese aufgrund der Modularität bzw. aufgrund des modularen Aufbaus hinsichtlich der erreichbaren elektrischen Leistungsabgabe beliebig skalierbar ist, es muss lediglich die Anzahl der in Reihe geschalteten Teilmodule an die jeweils geforderte Leistungsabgabe angepasst werden.

Ein weiterer wesentlicher Vorteil der erfindungsgemäßen Umrichteranordnung besteht darin, dass sich die ausgangsseitig ausgegebene Ausgangswechselspannung bzw. der ausgangsseitig abgegebene Ausgangswechselstrom durch individuelle Ansteuerung der Teilmodule bezüglich Oberschwingungsgehalt und Blindleistungsabgabe optimal an die Anforderungen der jeweils angeschlossenen Last bzw. der angeschlossenen Lasten anpassen lässt.

Als besonders vorteilhaft wird es angesehen, wenn die Umrichteranordnung mehrphasig ist und eine Mehrzahl an, zumindest zwei, Eingangswechselspannungsanschlüssen, an denen jeweils ein Phasenstrom eines mehrphasigen Eingangswechselstromes eingespeist werden kann, und eine Mehrzahl an, zumindest zwei, Ausgangswechselspannungsanschlüssen aufweist, an denen jeweils ein Phasenstrom eines mehrphasigen Ausgangswechselstromes entnommen werden kann, wobei die Umrichteranordnung pro Phase jeweils zumindest eine Reihenschaltung mit mindestens zwei in Reihe geschalteten Teilmodulen umfasst, wobei die Teilmodule der Reihenschaltungen jeweils mindestens ein Umrichtermodul, ein Wechselrichtermodul und ein Transformatormodul umfassen und wobei die Ausgänge der Transformatormodule jeder der Reihenschaltungen jeweils parallel geschaltet sind und jeweils zumindest einen der Ausgangswechselspannungsanschlüsse der Umrichteranordnung bilden.

Vorzugsweise ist die Umrichteranordnung dreiphasig. Die drei Eingangswechselspannungsanschlüsse der Umrichteranordnung bilden vorzugsweise elektrisch eine Dreieckschaltung oder eine Sternschaltung.

Alternativ kann vorgesehen sein, dass die Umrichteranordnung dreiphasig ist und sechs Reihenschaltungen mit jeweils mindestens zwei in Reihe geschalteten Teilmodulen eine dreiphasige Brückenschaltung bilden.

Bezüglich des Aufbaus der Teilmodule wird es als vorteilhaft angesehen, wenn zumindest eines der Transformatormodule, insbesondere alle Transformatormodule, eine elektrische Sicherung aufweist. Vorzugsweise ist die Sicherung elektrisch auf der Primärseite des Transformatormoduls angeordnet. Der Vorteil einer elektrischen Sicherung im Transformatormodul besteht darin, dass sich die elektrische Verbindung innerhalb des Teilmoduls im Falle eines auftretenden Überstroms unterbrechen lässt, so dass die Brandgefahr signifikant reduziert wird.

Mit Blick auf die Reduktion bzw. Unterdrückung von Gleichströmen, die den Transformator schädigen könnten (Trafosättigung), wird es als vorteilhaft angesehen, wenn zumindest eines der Transformatormodule, insbesondere alle Transformatormodule, einen Kondensator aufweist. Vorzugsweise ist der Kondensator elektrisch auf der Primärseite des Transformatormoduls angeordnet.

Bezüglich des Aufbaus der Umrichtermodule wird es als vorteilhaft angesehen, wenn zumindest eines der Umrichtermodule, vorzugsweise alle Umrichtermodule, jeweils vier in einer H-Brückenschaltung verschaltete Schaltelemente aufweist. Bezüglich des Aufbaus der Wechselrichtermodule wird es als vorteilhaft angesehen, wenn zumindest eines der Wechselrichtermodule, vorzugsweise alle Wechselrichtermodule, mit einer die Wechselrichtermodule ansteuernden Ansteuerschaltung in Verbindung stehen, die derart ausgestaltet ist, dass die an dem Ausgangswechselspannungsanschluss oder den Ausgangswechselspannungsanschlüssen gebildete Ausgangsspannung eine andere Frequenz aufweist als die an dem Eingangswechselspannungsanschluss oder den Eingangswechselspannungsanschlüssen anliegenden Eingangsspannung.

Die Erfindung bezieht sich auf eine Anordnung mit einer Umrichteranordnung. Erfindungsgemäß ist vorgesehen, dass die Umrichteranordnung wie oben beschrieben ausgestaltet ist und ein Lichtbogenofen an den Ausgangswechselspannungsanschluss oder die Ausgangswechselspannungsanschlüsse der Umrichteranordnung angeschlossen ist. Mit der Umrichteranordnung lässt sich der Stromverlauf durch den Lichtbogenofen optimal einstellen: Beispielsweise kann der Strom durch den Lichtbogenofen eine andere Frequenz und/oder einen anderen zeitlichen Verlauf (nicht sinusförmig) als der Eingangsstrom auf der Eingangsseite der Umrichteranordnung aufweisen. Vorzugsweise wird der Stromverlauf im Bereich der Nulldurchgänge steiler als bei einem Sinusverlauf eingestellt. Bezüglich weiterer Vorteile der erfindungsgemäßen Anordnung sei auf die obigen Ausführungen verwiesen.

Die Erfindung bezieht sich darüber hinaus auf ein Verfahren zum Erzeugen zumindest eines Ausgangswechselstromes für den Betrieb eines Lichtbogenofens, mit einer Umrichteranordnung, die mit zumindest einem Eingangswechselspannungsanschluss, an dem ein Wechselstrom eingespeist werden kann, und zumindest einem Ausgangswechselspannungsanschluss, an dem Wechselstrom entnommen werden kann, ausgestattet ist, wobei die Umrichteranordnung zumindest eine Reihenschaltung mit mindestens zwei in Reihe geschalteten Teilmodulen umfasst und wobei die Teilmodule der Reihenschaltung jeweils mindestens ein Umrichtermodul, ein Wechselrichtermodul und ein Transformatormodul umfassen.

Bezüglich eines solchen Verfahrens ist vorgesehen, dass der Ausgangswechselstrom durch Addition der an den Ausgängen der Transformatormodule der Reihenschaltung ausgegebenen Transformatorströme gebildet wird.

Bezüglich der Vorteile des erfindungsgemäßen Verfahrens sei auf die obigen Ausführungen im Zusammenhang mit der erfindungsgemäßen Anordnung verwiesen.

Vorzugsweise wird mit dem oder den Transformatormodulen die Spannung in Richtung des jeweiligen Ausgangswechselspannungsanschlusses herauf- oder herabgesetzt.

Auch ist es vorteilhaft, wenn mit einem Kondensator in dem oder in jedem der Transformatormodule jeweils Gleichanteile im Stromsignal unterdrückt oder zumindest gedämpft werden.

Mit Blick auf eine Reduktion der Brandgefahr im Falle eines Versagens von Komponenten wird es als vorteilhaft angesehen, wenn mit einer Sicherung in dem oder in jedem der Transformatormodule jeweils ein etwaig auftretender Überstrom abgeschaltet wird.

Die Erfindung wird nachfolgend anhand von Ausführungsbeispielen näher erläutert; dabei zeigen beispielhaft
- Figur 1: ein Ausführungsbeispiel für eine Umrichteranordnung, an die eine elektrische Last in Form eines Lichtbogenofens angeschlossen ist,
- Figur 2: ein Ausführungsbeispiel für eine Wechselrichtereinrichtung, die bei der Umrichteranordnung gemäß Figur 1 eingesetzt werden kann,
- Figur 3: ein Ausführungsbeispiel für eine mehrere Teilmodule aufweisende Reihenschaltung, die bei dem Wechselrichter gemäß Figur 2 eingesetzt werden kann,
- Figur 4: ein Ausführungsbeispiel für ein Teilmodul, das bei der Reihenschaltung gemäß Figur 3 eingesetzt werden kann,
- Figur 5: ein Ausführungsbeispiel für ein Umrichtermodul, das bei dem Teilmodul gemäß Figur 4 eingesetzt werden kann,
- Figur 6: ein weiteres Ausführungsbeispiel für ein Umrichtermodul, das bei dem Teilmodul gemäß Figur 4 eingesetzt werden kann,
- Figur 7: ein Ausführungsbeispiel für ein Wechselrichtermodul, das bei dem Teilmodul gemäß Figur 4 eingesetzt werden kann,
- Figur 8: ein Ausführungsbeispiel für ein Transformatormodul, das bei dem Teilmodul gemäß Figur 4 eingesetzt werden kann,
- Figur 9: ein weiteres Ausführungsbeispiel für ein Transformatormodul, das bei dem Teilmodul gemäß Figur 4 eingesetzt werden kann,
- Figur 10: ein weiteres Ausführungsbeispiel für eine Wechselrichtereinrichtung, die bei der Umrichteranordnung gemäß Figur 1 eingesetzt werden kann, wobei die Figur 10 zusätzlich den elektrischen Anschluss einer elektrischen Last an die Wechselrichtereinrichtung zeigt,
- Figur 11: ein weiteres Ausführungsbeispiel für eine Wechselrichtereinrichtung, die bei der Umrichteranordnung gemäß Figur 1 eingesetzt werden kann, wobei an die Wechselrichtereinrichtung zwei elektrische Lasten angeschlossen sind, und
- Figur 12: ein Ausführungsbeispiel für eine einphasige Wechselrichtereinrichtung, die bei einer einphasigen Umrichteranordnung eingesetzt werden kann.

In den Figuren werden der Übersicht halber für identische oder vergleichbare Komponenten stets dieselben Bezugszeichen verwendet.

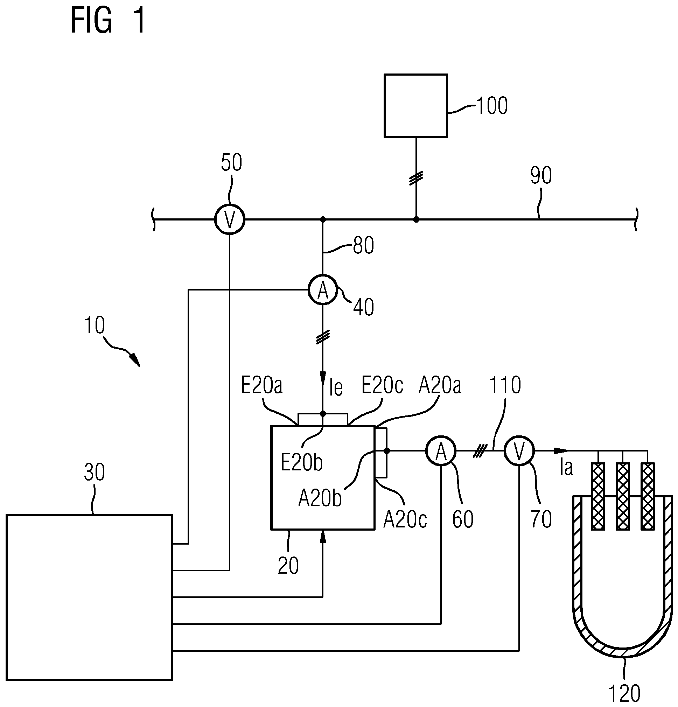

Die Figur 1 zeigt eine Umrichteranordnung 10, die eine Wechselrichtereinrichtung 20, eine Ansteuerschaltung 30, einen Stromsensor 40 sowie einen Spannungssensor 50 auf der Eingangsseite der Umrichteranordnung 10 und einen Stromsensor 60 sowie einen Spannungssensor 70 auf der Ausgangsseite der Umrichteranordnung 10 umfasst.

Die Wechselrichtereinrichtung 20 weist drei Eingangswechselspannungsanschlüsse E20a, E20b und E20c, die an eine dreiphasige elektrische Leitung 80 angeschlossen sind. Über die dreiphasige Leitung 80 steht die Wechselrichtereinrichtung 20 mit einer Anschlussschiene 90 und einem nur schematisch angedeuteten Energieverteilnetz 100 in Verbindung.

Ausgangsseitig weist die Wechselrichtereinrichtung 20 drei Ausgangswechselspannungsanschlüsse A20a, A20b und A20c auf, über die die Wechselrichtereinrichtung 20 ausgangsseitig an eine dreiphasige elektrische Leitung 110 sowie über diese an eine Drehstromlast 120 in Form eines Lichtbogenofens angeschlossen ist.

Die Umrichteranordnung 10 gemäß Figur 1 kann beispielsweise wie folgt betrieben werden:
Die Ansteuerschaltung 30 misst mittels des Stromsensors 40 den eingangsseitig in die Wechselrichtereinrichtung 20 hineinfließenden dreiphasigen Eingangswechselstrom Ie und mit dem Spannungssensor 50 die an der Wechselrichtereinrichtung 20 anliegende dreiphasige Eingangsspannung. Darüber hinaus misst sie mittels des Stromsensors 60 und des Spannungssensors 70 den von der Wechselrichtereinrichtung 20 ausgegebenen dreiphasigen Ausgangswechselstrom Ia sowie die ausgangsseitig abgegebene dreiphasige Ausgangsspannung.

Mit Hilfe der Messwerte ermittelt die Ansteuerschaltung 30 eine optimale Ansteuerung der Wechselrichtereinrichtung 20 derart, dass der dreiphasige Ausgangswechselstrom Ia für den Betrieb der Drehstromlast 120 optimal ausgestaltet ist. Handelt es sich bei der Drehstromlast 120 beispielsweise um einen Lichtbogenofen, so kann es vorteilhaft sein, wenn die Spannungskurvenform der dreiphasigen Ausgangsspannung der Wechselrichtereinrichtung 20 nicht exakt sinusförmig ist, sondern in der Nähe des Stromnulldurchgangs erhöht ist, um einen besonders stabilen Lichtbogen im Lichtbogenofen hervorzurufen.

Darüber hinaus kann die Ansteuerschaltung 30 die Ausgangsfrequenz des dreiphasigen Ausgangswechselstroms Ia bzw. der dreiphasigen Ausgangswechselspannung an eine optimale Arbeitsfrequenz der Drehstromlast 120 anpassen: So kann beispielsweise die Frequenz des dreiphasigen Ausgangswechselstroms Ia kleiner oder größer als die Frequenz des dreiphasigen Eingangswechselstroms Ie bzw. kleiner oder größer als die Netzfrequenz des Energieverteilnetzes 100 sein. Beispielsweise kann die Frequenz des dreiphasigen Ausgangswechselstroms Ia in einem Frequenzbereich zwischen 30 und 500 Hz variiert werden, wenn dies für einen optimalen Betrieb der Drehstromlast 120 vorteilhaft ist.

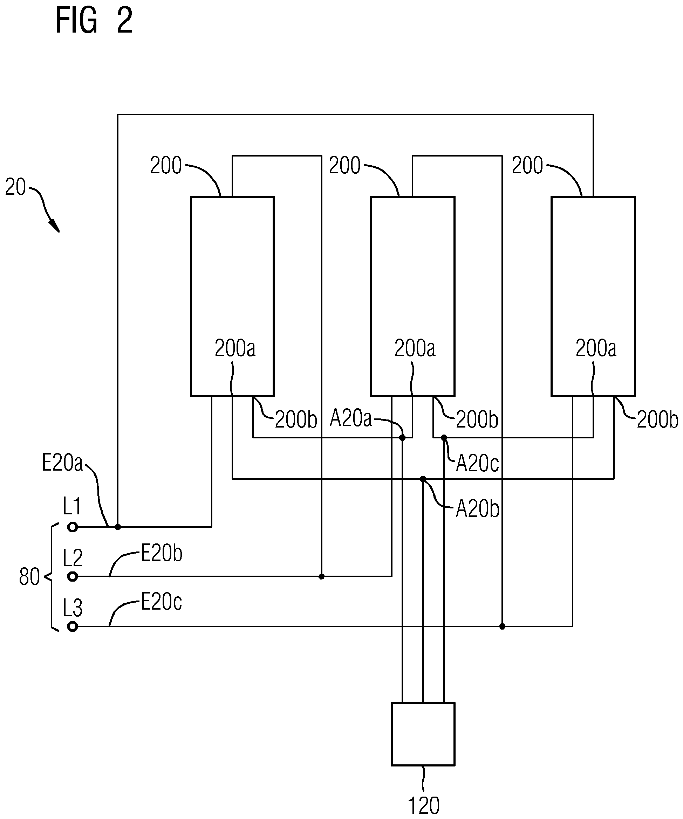

Die Figur 2 zeigt ein Ausführungsbeispiel für eine Wechselrichtereinrichtung 20, die bei der Umrichteranordnung 10 gemäß Figur 1 eingesetzt werden kann. Man erkennt die drei Eingangswechselspannungsanschlüsse E20a, E20b und E20c, die an die dreiphasige Leitung 80 gemäß Figur 1 angeschlossen sind. Die drei Phasen der dreiphasigen Leitung 80 sind in der Figur 2 mit dem Bezugszeichen L1, L2 und L3 gekennzeichnet.

Die Wechselrichtereinrichtung 20 weist drei Reihenschaltungen 200 auf, deren in Reihe geschaltete Komponenten aus Gründen der Übersicht in der Figur 2 nicht näher dargestellt sind. Die drei im Dreieck verschalteten Reihenschaltungen 200 bzw. die durch die Reihenschaltungen 200 gebildete Dreieckschaltung ist über die Ausgangswechselspannungsanschlüsse A20a, A20b und A20c der Wechselrichtereinrichtung 20 an eine äußere elektrische Last, beispielsweise die Drehstromlast 120 gemäß Figur 1, angeschlossen.

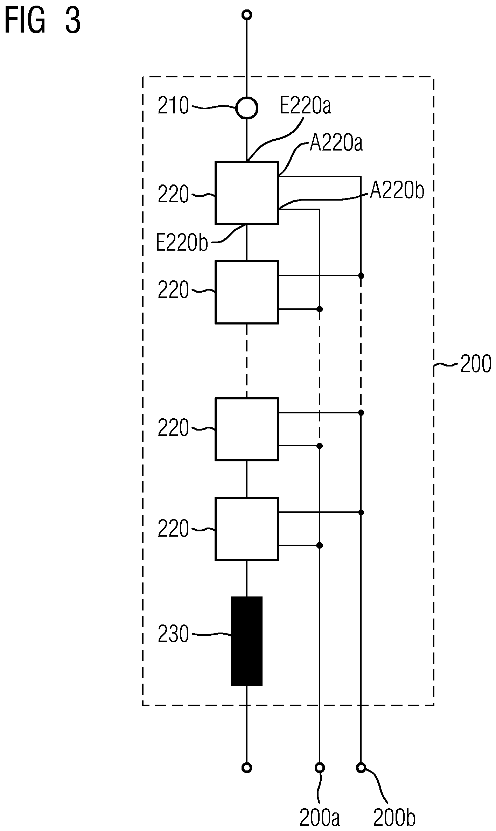

Die Figur 3 zeigt ein Ausführungsbeispiel für eine Reihenschaltung 200, die bei der Wechselrichtereinrichtung 20 gemäß Figur 2 eingesetzt werden kann. Die Reihenschaltung 200 gemäß Figur 3 weist einen vorzugsweise an die Ansteuerschaltung 30 gemäß Figur 1 angeschlossenen Stromsensor 210, eine Vielzahl an Teilmodulen 220 sowie eine Induktivität 230 auf. Der Stromsensor 210, die Teilmodule 220 sowie die Induktivität 230 sind elektrisch in Reihe geschaltet. Die Reihenschaltung der Teilmodule 220 erfolgt über deren Eingangsanschlüsse E220a und E220b.

Jedes der Teilmodule 220 weist zwei Ausgangsanschlüsse A220a und A220b auf. Die Ausgangsanschlüsse A220a und A220b der Teilmodule 220 sind parallel geschaltet und bilden zwei Ausgangsanschlüsse 200a und 200b, die - wie die Figur 2 zeigt - jeweils einen der Ausgangswechselspannungsanschlüsse A20a, A20b bzw. A20c der Wechselrichtereinrichtung 20 gemäß Figur 2 bzw. Figur 1 bilden.

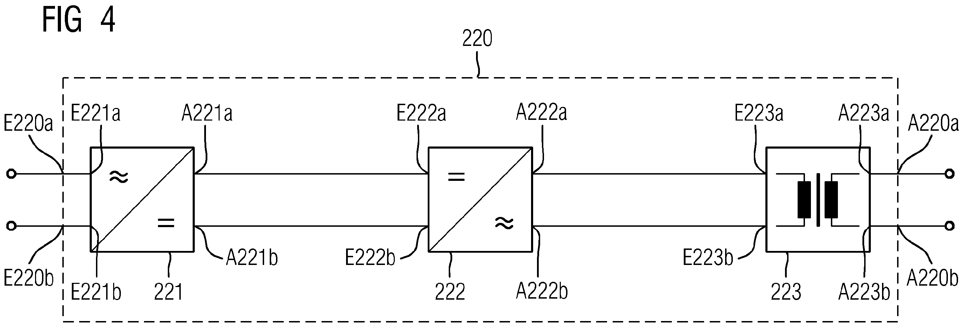

Die Figur 4 zeigt ein Ausführungsbeispiel für ein Teilmodul 220, das bei der Reihenschaltung 200 gemäß Figur 3 eingesetzt werden kann. Das Teilmodul 220 umfasst ein Umrichtermodul 221, ein Wechselrichtermodul 222 sowie ein Transformatormodul 223. Das Umrichtermodul 221, das Wechselrichtermodul 222 sowie das Transformatormodul 223 sind kaskadiert hintereinander angeordnet. Dies bedeutet, dass die Ausgänge des Umrichtermoduls 221 an die Eingänge des Wechselrichtermoduls 222 und die Ausgänge des Wechselrichtermoduls 222 an die Eingänge des Transformatormoduls 223 angeschlossen sind. Die Eingänge E221a und E221b des Umrichtermoduls 221 bilden die Eingänge E220a und E220b des Teilmoduls 220, die zur Bildung der Reihenschaltung der Teilmodule 220 in Reihe geschaltet sind (vgl. Figur 3).

Die Ausgänge 223a und 223b des Transformatormoduls 223 sind bei den Teilmodulen 220 der Reihenschaltung 200 gemäß Figur 3 ausgangsseitig parallel geschaltet, um die Ausgangsanschlüsse 200a und 200b gemäß Figur 3 zu bilden.

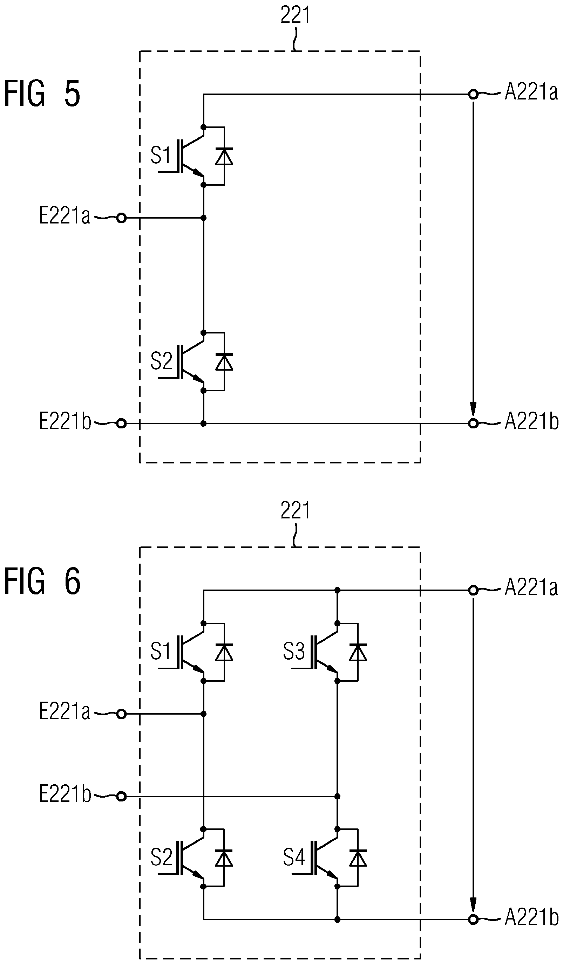

Die Figur 5 zeigt ein Ausführungsbeispiel für ein Umrichtermodul 221, das bei dem Teilmodul 220 gemäß Figur 4 eingesetzt werden kann. Das Umrichtermodul 221 umfasst zwei Schaltelemente S1 und S2, zu denen jeweils eine Diode parallel geschaltet ist. Bei den Schaltelementen S1 und S2 kann es sich beispielsweise um Halbleiterschalter, z. B. in Form von Transistoren, handeln. Die Ausgänge des Umrichtermoduls 221 sind in den Figuren 4 und 5 mit den Bezugszeichen A221a und A221b gekennzeichnet und an die Eingänge E222a und E222b des nachgeordneten Wechselrichtermoduls 222 angeschlossen.

Die Ansteuerung der Schaltelemente S1 und S2 des Umrichtermoduls 221 erfolgt vorzugsweise durch die Ansteuerschaltung 30 gemäß Figur 1 in Abhängigkeit von den Strom- und Spannungswerten, die die beiden Stromsensoren 40 und 60, die beiden Spannungssensoren 50 und 70 und die Stromsensoren 210 der Reihenschaltungen 200 an die Ansteuerschaltung 30 übermitteln.

Die Figur 6 zeigt ein weiteres Ausführungsbeispiel für ein Umrichtermodul 221, das bei dem Teilmodul 220 gemäß Figur 4 eingesetzt werden kann. Das Umrichtermodul 221 umfasst vier Schaltelemente S1, S2, S3 und S4, zu denen jeweils eine Diode parallel geschaltet ist. Die vier Schaltelemente S1 bis S4 sind in Form einer H-Brückenschaltung verschaltet und werden vorzugsweise von der Ansteuerschaltung 30 gemäß Figur 1 in Abhängigkeit von den Strom- und Spannungswerten angesteuert, die von den beiden Stromsensoren 40 und 60, den beiden Spannungssensoren 50 und 70 und den Stromsensoren 210 der Reihenschaltungen 200 geliefert werden. Die Ausgänge des Umrichtermoduls 221 sind in den Figuren 4 und 6 mit den Bezugszeichen A221a und A221b gekennzeichnet und an die Eingänge E222a und E222b des nachgeordneten Wechselrichtermoduls 222 angeschlossen.

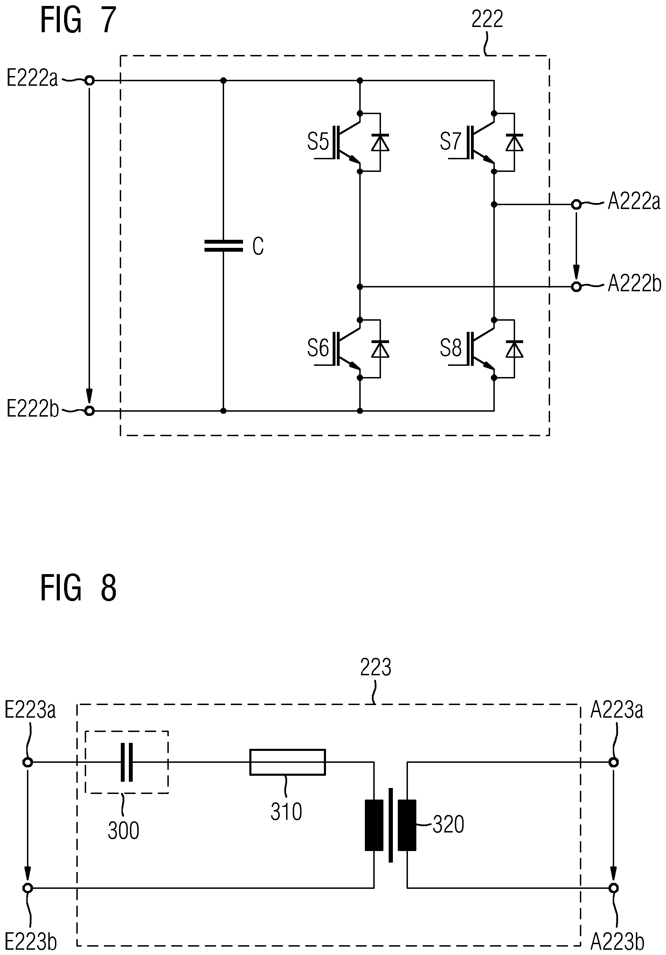

Die Figur 7 zeigt ein Ausführungsbeispiel für ein Wechselrichtermodul 222, das bei dem Teilmodul 220 gemäß Figur 4 eingesetzt werden kann. Das Wechselrichtermodul 222 gemäß Figur 7 weist vier Schaltelemente S5, S6, S7 und S8 auf, zu denen jeweils eine Diode parallel geschaltet ist. Die vier Schaltelemente S5, S6, S7 und S8 sind in Form einer H-Brückenschaltung verschaltet, deren Ausgänge die Ausgänge A222a und A222b des Wechselrichtermoduls 222 bilden.

Zu der H-Brückenschaltung parallel geschaltet ist ein Kondensator C, der die an das vorgeschaltete Umrichtermodul 221 (vgl. Figur 4) angeschlossenen Eingangsanschlüsse E222a und E222b des Wechselrichtermoduls 222 bildet.

Die Ausgangsanschlüsse A222a und A222b des Wechselrichtermoduls 222 sind an Eingangsanschlüsse E223a und E223b des nachgeschalteten Transformatormoduls 223 (vgl. Figur 4) angeschlossen.

Die Ansteuerung der vier Schaltelemente S5, S6, S7 und S8 erfolgt vorzugsweise durch die Ansteuerschaltung 30 gemäß Figur 1 in Abhängigkeit von den Messwerten, die von den beiden Stromsensoren 40 und 60, den beiden Spannungssensoren 50 und 70 und den Stromsensoren 210 der Reihenschaltungen 200 geliefert werden.

Die Figur 8 zeigt ein Ausführungsbeispiel für ein Transformatormodul 223, das bei dem Teilmodul 220 gemäß Figur 4 eingesetzt werden kann. Das Transformatormodul 223 weist einen Kondensator 300, eine elektrische Sicherung 310 sowie einen Transformator 320 auf. Bei der elektrischen Sicherung 310 kann es sich z. B. um eine Schmelzsicherung, einen elektromechanischen Schalter, ein Halbleiterrelais oder einen pyromechanischen Unterbrecher handeln. Bei dem Ausführungsbeispiel gemäß Figur 8 sind der Kondensator 300 und die elektrische Sicherung 310 auf der Primärseite des Transformators 320 angeordnet.

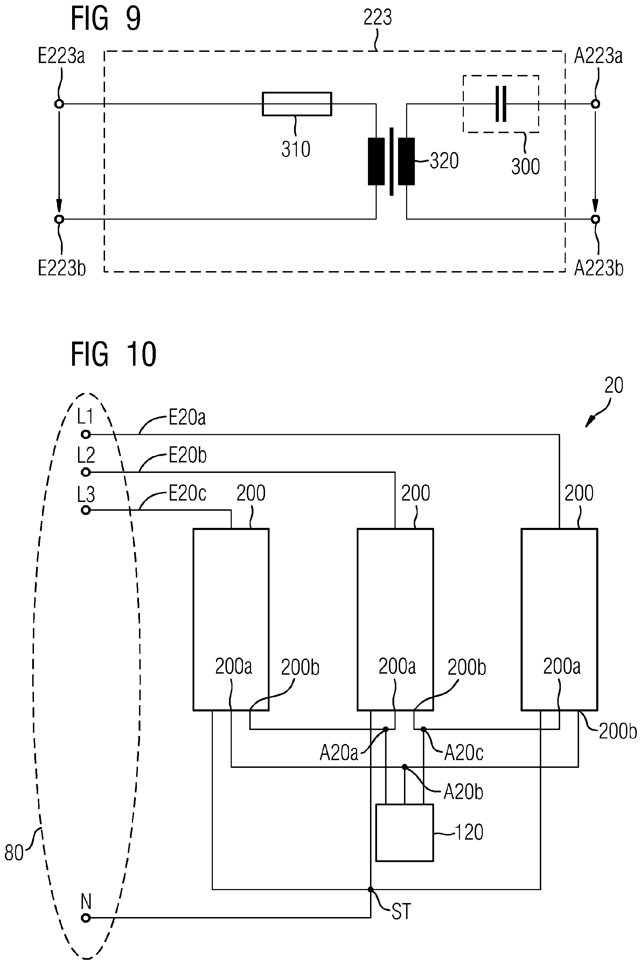

Die Figur 9 zeigt ein weiteres Ausführungsbeispiel für ein Transformatormodul 223, das bei dem Teilmodul 220 gemäß Figur 4 eingesetzt werden kann. Das Transformatormodul 223 gemäß Figur 9 weist - in Übereinstimmung mit dem Ausführungsbeispiel gemäß Figur 8 - einen Kondensator 300, eine elektrische Sicherung 310 sowie einen Transformator 320 auf. Im Unterschied zu dem Ausführungsbeispiel gemäß Figur 8 ist der Kondensator 300 auf der Sekundärseite des Transformators 320 angeordnet. Die elektrische Sicherung 310 ist - wie bei dem Ausführungsbeispiel gemäß Figur 8 - auf der Primärseite des Transformators 320 angeordnet. Alternativ könnte auch die elektrische Sicherung 310 auf der Sekundärseite des Transformators 320 angeordnet sein, jedoch wird eine Anordnung auf der Primärseite als bevorzugt angesehen.

Die Figur 10 zeigt ein weiteres Ausführungsbeispiel für eine Wechselrichtereinrichtung 20, die bei der Umrichteranordnung 10 gemäß Figur 1 eingesetzt werden kann. Im Unterschied zu dem Ausführungsbeispiel gemäß Figur 2 sind die Reihenschaltungen 200 der Wechselrichtereinrichtung 20 nicht im Dreieck verschaltet, sondern sternförmig unter Bildung einer Sternschaltung. Der durch die Verschaltung gebildete Sternpunkt ist in der Figur 10 mit dem Bezugszeichen ST gekennzeichnet.

An den Sternpunkt ST kann ein Rückleiter N, beispielsweise der Rückleiter der dreiphasigen Leitung 80 gemäß Figur 1, angeschlossen werden.

An die Ausgangswechselspannungsanschlüsse A20a, A20b und A20c der Wechselrichtereinrichtung 20 gemäß Figur 10 kann eine elektrische Last, beispielsweise die Drehstromlast 120 gemäß Figur 1, angeschlossen werden, wie dies im Zusammenhang mit der Figur 1 oben bereits im Detail erläutert worden ist.

Der Aufbau der Reihenschaltungen 200 ist in der Figur 10 aus Gründen der Übersicht nicht näher dargestellt. Die Reihenschaltungen 200 können beispielsweise den Reihenschaltungen 200 der Wechselrichtereinrichtung 20 gemäß Figur 2 entsprechen bzw. so aufgebaut sein, wie dies im Zusammenhang mit den Figuren 3 bis 9 oben im Detail beispielhaft erläutert worden ist. Bezüglich des Aufbaus der Reihenschaltungen 200 gemäß Figur 10 gelten die obigen Ausführungen somit entsprechend.

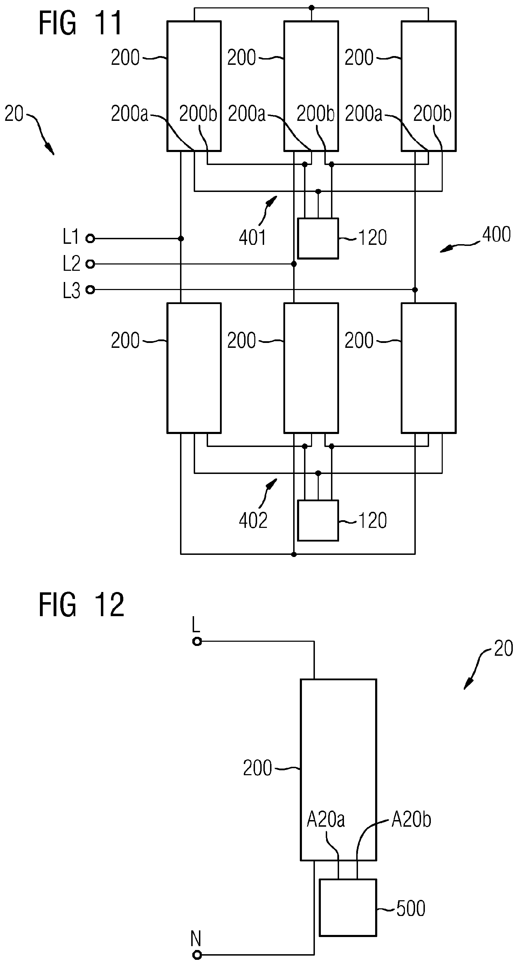

Die Figur 11 zeigt ein Ausführungsbeispiel für eine Wechselrichtereinrichtung 20, bei der Reihenschaltungen 200, die jeweils mindestens zwei in Reihe geschaltete und aus Gründen der Übersicht in Figur 11 nicht gezeigte Teilmodule aufweisen, eine Brückenschaltung 400 bilden. Die Ausgänge 401 und 402 der Brückenschaltung 400 bilden Ausgangswechselspannungsanschlüsse der Wechselrichtereinrichtung 20, an die elektrischen Lasten, wie beispielsweise die Drehstromlasten 120 bzw. Lichtbogenöfen gemäß Figur 1, angeschlossen werden können. Alternativ können die Ausgänge 401 und 402 der Brückenschaltung 400 auch parallelgeschaltet werden und gemeinsam die Ausgangswechselspannungsanschlüsse A20a, A20b und A20c (vgl. Figur 1) der Wechselrichtereinrichtung 20 bilden.

Der Aufbau der Reihenschaltungen 200 der Wechselrichtereinrichtung 20 kann beispielsweise dem Aufbau der Reihenschaltungen 200 entsprechen, wie sie im Zusammenhang mit den Figuren 2 bis 9 oben im Detail erläutert worden sind.

Die Figur 12 zeigt ein Ausführungsbeispiel für eine einphasige Wechselrichtereinrichtung 20, die eine Reihenschaltung mit einer Vielzahl an in Reihe geschalteten und in der Figur 12 aus Gründen der Übersicht nicht weiter dargestellten Teilmodulen umfasst. Die Ausgangsanschlüsse der Teilmodule der Reihenschaltung 200 sind parallel geschaltet und bilden Ausgangswechselspannungsanschlüsse A20a und A20b der Wechselrichtereinrichtung 20, an die eine einphasige elektrische Last 500 angeschlossen werden kann. Die Reihenschaltung 200 des Wechselrichters 20 gemäß Figur 12 kann von ihrem Aufbau den Reihenschaltungen 200 entsprechen, wie sie im Zusammenhang mit den Figuren 2 bis 9 oben im Detail erläutert worden sind.

### Bezugszeichenliste

- 10: Umrichteranordnung
- 20: Wechselrichtereinrichtung
- 30: Steuerschaltung
- 40: Stromsensor
- 50: Spannungssensor
- 60: Stromsensor
- 70: Spannungssensor
- 80: elektrische Leitung
- 90: Anschlussschiene
- 100: Energieverteilnetz
- 110: elektrische Leitung
- 120: Drehstromlast
- 200: Reihenschaltung
- 200a: Ausgangsanschluss
- 200b: Ausgangsanschluss
- 210: Stromsensor
- 220: Teilmodule
- 221: Umrichtermodul
- 222: Wechselrichtermodul
- 223: Transformatormodul
- 230: Induktivität
- 300: Kondensator
- 310: Sicherung
- 320: Transformator
- 400: Brückenschaltung
- 401: Ausgang
- 402: Ausgang
- 500: elektrische Last

- A20a: Ausgangswechselspannungsanschluss
- A20b: Ausgangswechselspannungsanschluss
- A20c: Ausgangswechselspannungsanschluss
- A220a: Ausgangsanschluss des Teilmoduls
- A220b: Ausgangsanschluss des Teilmoduls
- A221a: Ausgangsanschluss des Umrichtermoduls
- A221b: Ausgangsanschluss des Umrichtermoduls
- A222a: Ausgangsanschluss des Wechselrichtermoduls
- A222b: Ausgangsanschluss des Wechselrichtermoduls
- A223a: Ausgangsanschluss des Transformatormoduls
- A223b: Ausgangsanschluss des Transformatormoduls
- C: Kondensator
- E20a: Eingangswechselspannungsanschluss
- E20b: Eingangswechselspannungsanschluss
- E20c: Eingangswechselspannungsanschluss
- E220a: Einganganschluss des Teilmoduls
- E220b: Einganganschluss des Teilmoduls
- E221a: Einganganschluss des Umrichtermoduls
- E221b: Einganganschluss des Umrichtermoduls
- E222a: Einganganschluss des Wechselrichtermoduls
- E222b: Einganganschluss des Wechselrichtermoduls
- E223a: Einganganschluss des Transformatormoduls
- E223b: Einganganschluss des Transformatormoduls
- Ia: Ausgangswechselstrom
- L1: Phase
- L2: Phase
- L3: Phase
- N: Rückleiter
- ST: Sternpunkt
- S1: Schaltelement
- S2: Schaltelement
- S3: Schaltelement
- S4: Schaltelement
- S5: Schaltelement
- S6: Schaltelement
- S7: Schaltelement
- S8: Schaltelement
- Ie: Eingangswechselstrom

## Patentansprüche

1. Anordnung mit einer
- Umrichteranordnung (10) mit zumindest einem Eingangswechselspannungsanschluss (E20a, E20b, E20c), an dem ein Wechselstrom eingespeist werden kann, und zumindest einem Ausgangswechselspannungsanschluss (A20a, A20b, A20c), an dem Wechselstrom entnommen werden kann,
- wobei die Umrichteranordnung (10) zumindest eine Reihenschaltung (200) mit mindestens zwei in Reihe geschalteten Teilmodulen (220) umfasst,
- wobei die Teilmodule (220) der Reihenschaltung (200) jeweils mindestens ein Gleichrichtermodul (221), ein Wechselrichtermodul (222) und ein Transformatormodul (223) umfassen, und
- wobei die Ausgänge der Transformatormodule (223) parallel geschaltet sind und den Ausgangswechselspannungsanschluss (A20a, A20b, A20c) oder zumindest einen der Ausgangswechselspannungsanschlüsse bilden,
**gekennzeichnet durch** einen
- Lichtbogenofen (120), der an den Ausgangswechselspannungsanschluss (A20a, A20b, A20c) oder die Ausgangswechselspannungsanschlüsse der Umrichteranordnung (10) angeschlossen ist.

2. Anordnung (10) nach Anspruch 1,
**dadurch gekennzeichnet, dass**
- die Umrichteranordnung (10) mehrphasig ist und eine Mehrzahl an, zumindest zwei, Eingangswechselspannungsanschlüssen, an denen jeweils ein Phasenstrom eines mehrphasigen Eingangswechselstromes eingespeist werden kann, und eine Mehrzahl an, zumindest zwei, Ausgangswechselspannungsanschlüssen aufweist, an denen jeweils ein Phasenstrom eines mehrphasigen Ausgangswechselstromes entnommen werden kann,
- wobei die Umrichteranordnung (10) pro Phase jeweils zumindest eine Reihenschaltung (200) mit mindestens zwei in Reihe geschalteten Teilmodulen (220) umfasst,
- wobei die Teilmodule (220) der Reihenschaltungen jeweils mindestens ein Gleichrichtermodul (221), ein Wechselrichtermodul (222) und ein Transformatormodul (223) umfassen und
- wobei die Ausgänge der Transformatormodule (223) jeder der Reihenschaltungen jeweils parallel geschaltet sind und jeweils zumindest einen der Ausgangswechselspannungsanschlüsse der Umrichteranordnung (10) bilden.

3. Anordnung (10) nach einem der voranstehenden Ansprüche, **dadurch gekennzeichnet, dass**
- die Umrichteranordnung (10) dreiphasig ist und
- die drei Eingangswechselspannungsanschlüsse der Umrichteranordnung (10) elektrisch eine Dreieckschaltung oder eine Sternschaltung bilden.

4. Anordnung (10) nach einem der voranstehenden Ansprüche 1 bis 3,
**dadurch gekennzeichnet, dass**
- die Umrichteranordnung (10) dreiphasig ist und
- sechs Reihenschaltungen mit jeweils mindestens zwei in Reihe geschalteten Teilmodulen (220) eine dreiphasige Brückenschaltung bilden.

5. Anordnung (10) nach einem der voranstehenden Ansprüche, **dadurch gekennzeichnet, dass** zumindest eines der Transformatormodule (223), insbesondere alle Transformatormodule (223), eine elektrische Sicherung (310) aufweist.

6. Anordnung (10) nach Anspruch 5,
**dadurch gekennzeichnet, dass** die Sicherung (310) elektrisch auf der Primärseite des Transformatormoduls (223) angeordnet ist.

7. Anordnung (10) nach einem der voranstehenden Ansprüche, **dadurch gekennzeichnet, dass** zumindest eines der Transformatormodule (223), insbesondere alle Transformatormodule (223), einen Kondensator (C) aufweist.

8. Anordnung (10) nach Anspruch 7,
**dadurch gekennzeichnet, dass** der Kondensator (C) elektrisch auf der Primärseite des Transformatormoduls (223) angeordnet ist.

9. Anordnung (10) nach einem der voranstehenden Ansprüche, **dadurch gekennzeichnet, dass** zumindest eines der Umrichtermodule, vorzugsweise alle Umrichtermodule, jeweils vier in einer H-Brückenschaltung verschaltete Schaltelemente aufweist.

10. Anordnung (10) nach einem der voranstehenden Ansprüche, **dadurch gekennzeichnet, dass** zumindest eines der Wechselrichtermodule (222), vorzugsweise alle Wechselrichtermodule (222), mit einer die Wechselrichtermodule (222) ansteuernden Ansteuerschaltung (30) in Verbindung stehen, die derart ausgestaltet ist, dass die an dem Ausgangswechselspannungsanschluss (A20a, A20b, A20c) oder den Ausgangswechselspannungsanschlüssen gebildete Ausgangsspannung eine andere Frequenz aufweist als die an dem Eingangswechselspannungsanschluss (E20a, E20b, E20c) oder den Eingangswechselspannungsanschlüssen anliegenden Eingangsspannung.

11. Verfahren zum Erzeugen zumindest eines Ausgangswechselstromes mit einer Umrichteranordnung (10), die mit zumindest einem Eingangswechselspannungsanschluss (E20a, E20b, E20c), an dem ein Wechselstrom eingespeist werden kann, und zumindest einem Ausgangswechselspannungsanschluss (A20a, A20b, A20c), an dem Wechselstrom entnommen werden kann, ausgestattet ist, wobei die Umrichteranordnung (10) zumindest eine Reihenschaltung (200) mit mindestens zwei in Reihe geschalteten Teilmodulen (220) umfasst und wobei die Teilmodule (220) der Reihenschaltung (200) jeweils mindestens ein Gleichrichtermodul (221), ein Wechselrichtermodul (222) und ein Transformatormodul (223) umfassen, wobei
der Ausgangswechselstrom durch Addition der an den Ausgängen der Transformatormodule (223) der Reihenschaltung (200) ausgegebenen Transformatorströme gebildet wird,
dadurch gekennzeichnt, dass
der Ausgangswechselstrom für den Betrieb eines Lichtbogenofens (120) erzeugt wird.

12. Verfahren nach Anspruch 11,
**dadurch gekennzeichnet, dass** mit dem oder den Transformatormodulen (223) die Spannung in Richtung des jeweiligen Ausgangswechselspannungsanschlusses herab- oder heraufgesetzt wird.

13. Verfahren nach einem der voranstehenden Ansprüche 11 bis 12,
**dadurch gekennzeichnet, dass** mit einem Kondensator (C) in dem oder in jedem der Transformatormodule (223) jeweils Gleichanteile im Stromsignal unterdrückt oder zumindest gedämpft werden.

14. Verfahren nach einem der voranstehenden Ansprüche 11 bis 13,
**dadurch gekennzeichnet, dass** mit einer Sicherung (310) in dem oder in jedem der Transformatormodule (223) jeweils ein etwaig auftretender Überstrom abgeschaltet wird.

## Claims

1. Arrangement comprising a
- converter arrangement (10) comprising at least one input AC voltage connection (E20a, E20b, E20c) at which an AC current can be fed in, and at least one output AC voltage connection (A20a, A20b, A20c) at which AC current can be drawn,
- wherein the converter arrangement (10) comprises at least one series circuit (200) comprising at least two submodules (220) connected in series,
- wherein the submodules (220) of the series circuit (200) each comprise at least one rectifier module (221), one inverter module (222) and one transformer module (223), and
- wherein the outputs of the transformer modules (223) are connected in parallel and form the output AC voltage connection (A20a, A20b, A20c) or at least one of the output AC voltage connections,
**characterized by** an
- arc furnace (120) that is connected to the output AC voltage connection (A20a, A20b, A20c) or the output AC voltage connections of the converter arrangement (10).

2. Arrangement (10) according to Claim 1,
**characterized in that**
- the converter arrangement (10) has multiple phases and a plurality of, at least two, input AC voltage connections at which in each case a phase current of a multiphase input AC current can be fed in, and a plurality of, at least two, output AC voltage connections at which in each case a phase current of a multiphase output AC current can be drawn,
- wherein the converter arrangement (10) comprises in each case at least one series circuit (200) per phase, said at least one series circuit comprising at least two submodules (220) connected in series,
- wherein the submodules (220) of the series circuits each comprise at least one rectifier module (221), one inverter module (222) and one transformer module (223), and
- wherein the outputs of the transformer modules (223) of each of the series circuits are each connected in parallel and each form at least one of the output AC voltage connections of the converter arrangement (10).

3. Arrangement (10) according to either of the preceding claims,
**characterized in that**
- the converter arrangement (10) has three phases and
- the three input AC voltage connections of the converter arrangement (10) electrically form a delta connection or a star connection.

4. Arrangement (10) according to one of the preceding Claims 1 to 3,
**characterized in that**
- the converter arrangement (10) has three phases and
- six series circuits comprising in each case at least two submodules (220) connected in series form a three-phase bridge circuit.

5. Arrangement (10) according to one of the preceding claims, **characterized in that**
at least one of the transformer modules (223), in particular all of the transformer modules (223), has/have an electrical fuse (310).

6. Arrangement (10) according to Claim 5,
**characterized in that**
the fuse (310) is electrically arranged on the primary side of the transformer module (223).

7. Arrangement (10) according to one of the preceding claims, **characterized in that**
at least one of the transformer modules (223), in particular all of the transformer modules (223), has/have a capacitor (C) .

8. Arrangement (10) according to Claim 7,
**characterized in that**
the capacitor (C) is electrically arranged on the primary side of the transformer module (223).

9. Arrangement (10) according to one of the preceding claims, **characterized in that**
at least one of the converter modules, preferably all of the converter modules, in each case has/have four switching elements interconnected in an H-bridge circuit.

10. Arrangement (10) according to one of the preceding claims, **characterized in that**
at least one of the inverter modules (222), preferably all of the inverter modules (222), is/are connected to a drive circuit (30) that drives the inverter modules (222) and is configured in such a way that the output voltage formed at the output AC voltage connection (A20a, A20b, A20c) or the output AC voltage connections has a different frequency than the input voltage present at the input AC voltage connection (E20a, E20b, E20c) or the input AC voltage connections.

11. Method for generating at least one output AC current using a converter arrangement (10) that is equipped with at least one input AC voltage connection (E20a, E20b, E20c) at which an AC current can be fed in, and at least one output AC voltage connection (A20a, A20b, A20c) at which AC current can be drawn, wherein the converter arrangement (10) comprises at least one series circuit (200) comprising at least two submodules (220) connected in series, and wherein the submodules (220) of the series circuit (200) each comprise at least one rectifier module (221), one inverter module (222) and one transformer module (223), wherein the output AC current is formed by addition of the transformer currents output at the outputs of the transformer modules (223) of the series circuit (200),
**characterized in that**
the output AC current is generated to operate an arc furnace (120) .

12. Method according to Claim 11,
**characterized in that**
the voltage is decreased or increased in the direction of the respective output AC voltage connection by the transformer module (223) or transformer modules (223).

13. Method according to either of the preceding Claims 11 and 12,
**characterized in that**
in each case DC components in the current signal are suppressed or at least damped by a capacitor (C) in the transformer module (223) or in each of the transformer modules (223) .

14. Method according to one of the preceding Claims 11 to 13, **characterized in that**
in each case any overcurrent occurring is switched off by a fuse (310) in the transformer module (223) or in each of the transformer modules (223).

## Revendications

1. Agencement comprenant
- un agencement (10) de convertisseur ayant au moins une borne (E20a, E20b, E20c) d'entrée de tension alternative, à laquelle un courant alternatif peut être injecté, et au moins une borne (A20a, A20b, A20c) de sortie de tension alternative, de laquelle un courant alternatif peut être prélevé,
- dans lequel l'agencement (10) de convertisseur comprend au moins un montage (200) série ayant au moins deux modules (220) partiels montés en série,
- dans lequel les modules (220) partiels du montage (200) série comprennent chacun au moins un module (221) de redresseur, un module (222) d'onduleur et un module (223) de transformateur, et
- dans lequel les sorties du module (223) de transformateur sont montées en parallèle et forment la borne (A20a, A20b, A20c) de sortie de tension alternative ou au moins l'une des bornes de sortie de tension alternative,
**caractérisé par**
- un four (120) à arc électrique, qui est connecté à la borne (A20a, A20b, A20c) de sortie de tension alternative ou aux bornes de sortie de tension alternative de l'agencement (10) de convertisseur.

2. Agencement (10) suivant la revendication 1,
**caractérisé en ce que**
- l'agencement (10) de convertisseur est polyphasé et a une pluralité, d'au moins deux, bornes d'entrée de tension alternative, auxquelles respectivement un courant de phase d'un courant alternatif d'entrée polyphasé peut être injecté et une pluralité, d'au moins deux, bornes de sortie de tension alternative, desquelles respectivement un courant de phase d'un courant alternatif de sortie polyphasé peut être prélevé,
- dans lequel l'agencement (10) de convertisseur comprend par phase respectivement au moins un montage (200) série ayant au moins deux modules (220) partiels montés en série,
- dans lequel les modules (220) partiels des montages série comprennent chacun au moins un module (221) de redresseur, un module (222) d'onduleur et un module (223) de transformateur,
- dans lequel les sorties des modules (223) de transformateur de chacun des montages série sont montés respectivement en parallèle et forment chacun au moins l'une des bornes de sortie de tension alternative de l'agencement (10) de convertisseur.

3. Agencement (10) suivant l'une des revendications précédentes, **caractérisé en ce que**
- l'agencement (10) de convertisseur est triphasé et
- les trois bornes d'entrée de tension alternative de l'agencement (10) de convertisseur forment électriquement un montage en triangle ou un montage en étoile.

4. Agencement (10) suivant l'une des revendications 1 à 3 précédentes,
**caractérisé en ce que**
- l'agencement (10) de convertisseur est triphasé et
- six montages série ayant chacun au moins deux modules (220) partiels montés en série forment un montage en pont triphasé.

5. Agencement (10) suivant l'une des revendications précédentes, **caractérisé en ce que**
- l'un des modules (223) de transformateur, notamment tous les modules (223) de transformateur, ont un fusible (310) électrique.

6. Agencement (10) suivant la revendication 5,
**caractérisé en ce que**
le fusible (310) est disposé électriquement du côté primaire du module (223) de transformateur.

7. Agencement (10) suivant l'une des revendications précédentes, **caractérisé en ce que**
au moins l'un des modules (223) de transformateur, notamment tous les modules (223) de transformateur, a un condensateur (C).

8. Agencement (10) suivant la revendication 7,
**caractérisé en ce que**
le condensateur (C) est monté électriquement du côté primaire du module (223) de transformateur.

9. Agencement (10) suivant l'une des revendications précédentes, **caractérisé en ce que**
au moins l'un des modules d'onduleur, de préférence tous les modules d'onduleur, a respectivement quatre éléments de coupure montés suivant un montage en pont H.

10. Agencement (10) suivant l'une des revendications précédentes, **caractérisé en ce que**
au moins l'un des modules (222) d'onduleur, de préférence tous les modules (222) d'onduleur, sont en connexion avec un circuit (30) de commande, qui commande les modules (222) d'onduleur et qui est conformé de manière à ce que la borne (A20a, A20b, A20c) de sortie de tension alternative ou la tension de sortie formée aux bornes de sortie de tension alternative ait une fréquence autre que la borne (E20a, E20b, E20c) d'entrée de tension alternative ou que la tension d'entrée s'appliquant aux bornes d'entrée de tension alternative.

11. Procédé de production d'au moins un courant alternatif de sortie comprenant un agencement (10) de convertisseur, qui est équipé d'au moins une borne (E20a, E20b, E20c) d'entrée de tension alternative, à laquelle un courant alternatif peut être injecté, et d'au moins une borne (A20a, A20b, A20c) de sortie de tension alternative, de laquelle du courant alternatif peut être prélevé, dans lequel l'agencement (10) de convertisseur comprend au moins un montage (200) série ayant au moins deux modules (220) partiels montés en série et dans lequel les modules (220) partiels du montage (200) en série comprennent chacun au moins un module (221) de redresseur, un module (222) d'onduleur et un module (223) de transformateur, dans lequel on forme le courant alternatif de sortie par addition des courants de transformateur sortant des sorties des modules (223) de transformateur du montage (200) série,
**caractérisé en ce que**
l'on produit des courants alternatifs de sortie pour le fonctionnement d'un four (120) à arc électrique.

12. Procédé suivant la revendication 11,
**caractérisé en ce que**
on abaisse ou on élève par le ou les modules (223) de transformateur la tension en direction de la borne de sortie respective de tension alternative.

13. Procédé suivant l'une des revendications 11 à 12 précédentes, **caractérisé en ce que**
on atténue respectivement des proportions continues dans le signal de courant par un condensateur (C) dans le ou dans chaque module (223) de transformateur.

14. Procédé suivant l'une des revendications 11 à 13 précédentes, **caractérisé en ce que**
l'on arrête respectivement une surintensité de courant se produisant éventuellement par un fusible (310) dans le ou dans chaque module (223) de transformateur.
